# FASCICULE DE BREVET EUROPEEN

(11) **EP 3 065 912 B1**
(45) Date de publication et mention de la délivrance du brevet: **06.06.2018**
(21) Numéro de dépôt: 14806006.4
(22) Date de dépôt: 05.11.2014
(51) Int. Cl.: B23C 5/20, B23C 9/00

(54) **DISPOSITIF DE REMPLACEMENT DE PLAQUETTES D'USINAGE**
VORRICHTUNG ZUM ERSETZEN VON BEARBEITUNGSEINSÄTZEN
DEVICE FOR REPLACING MACHINING INSERTS

(30) Priorité: 08.11.2013 FR 1360950
(43) Date de publication de la demande: 14.09.2016
(73) Titulaire: SNECMA, 75015 Paris (FR)
(72) Inventeur: HEBUTERNE, Damien, F-77550 Moissy-Cramayel Cedex (FR); BARON, Philippe, F-62720 Rinxent (FR); LECOMTE, Janvier, F-77550 Moissy-Cramayel Cedex (FR); YONDO, Ange, F-77550 Moissy-Cramayel Cedex (FR)
(74) Mandataire: Intès, Didier Gérard André
(86) Numéro de dépôt international: PCT/FR2014/052806
(87) Numéro de publication internationale: WO 2015/067886

(56) Documents cités:
- DE-A1- 2 245 481
- US-A- 4 552 046

## Description

La présente invention concerne un dispositif suivant le préambule de la revendication 1 et un procédé suivant le préambule de la revendication 5 pour le remplacement de plaquettes d'usinage sur un outil comprenant un corps et une tête portant une pluralité de plaquettes d'usinage, chaque plaquette étant maintenue sur ladite tête par un tel dispositif et un tel procédé sont connus du document US 4 552 046 A. Certains outils utilisés dans l'usinage de pièces présentent une tête d'usinage qui comprend un grand nombre de plaquettes d'usinage. C'est le cas notamment de certaines fraises alvéolaires, qui peuvent contenir par exemple plus de vingt plaquettes d'usinage réparties sur la surface de cette tête d'usinage. Ces plaquettes doivent être remplacées par des plaquettes neuves lorsqu'elles sont usées, afin de conserver la qualité de l'usinage. Le changement par un opérateur de toutes les plaquettes est long et fastidieux de par la taille réduite des plaquettes. De plus, une partie de la face latérale de la plupart des plaquettes est masquée par des rebords de la tête de l'outil, ce qui rend leur préhension par une pince plus difficile. Ces difficultés entraînent à la longue des troubles musculo-squelettiques chez l'opérateur chargé de remplacer les plaquettes sur de tels outils.

La présente invention vise à remédier à ces inconvénients.

L'invention vise à proposer un dispositif qui permette de remplacer les plaquettes sur une tête d'un outil d'usinage de façon rapide et fiable, sans inconvénients pour l'opérateur.

Ce but est atteint grâce au fait que ce dispositif comprend :
- Un positionneur comportant un élément de maintien apte à maintenir le corps de l'outil,
- Un poste de vissage avec une visseuse apte à visser et dévisser les vis, le positionneur étant apte à déplacer l'outil par rapport au poste de vissage,
- Un dispositif de préhension apte à saisir et déposer une plaquette,
- Un convoyeur comportant plusieurs réceptacles à plaquette, et le long duquel sont répartis un premier poste avec le dispositif de préhension, un deuxième poste avec un mécanisme de rotation sur elles-mêmes des plaquettes, un troisième poste avec un mécanisme de déchargement des plaquettes, et un quatrième poste avec un mécanisme d'alimentation en plaquettes,
- Un mécanisme de transport apte à déplacer le dispositif de préhension entre le positionneur et le premier poste du convoyeur,
- Un centre de commande apte à piloter de façon automatisée un ou plusieurs des mécanismes et dispositifs et/ou le convoyeur dudit dispositif de remplacement.

Grâce à ces dispositions, une plaquette peut être changée de façon automatisée avec une intervention minimale d'un opérateur, et de façon plus fiable et rapide que manuellement. De plus, un grand nombre de plaquettes d'un même outil d'usinage peut être changé en continu.

L'invention concerne également un procédé pour le remplacement d'une ou plusieurs plaquettes d'usinage sur un outil constitué d'un corps et d'une tête comportant au moins une plaquette d'usinage, chaque plaquette présentant au moins une arête et un perçage et étant maintenue sur la tête par une vis passant par ce perçage.

Selon l'invention, le procédé comporte les étapes suivantes :
(a) On fournit un positionneur comportant un élément de maintien apte à recevoir le corps de l'outil, et on place le corps dans l'élément de maintien,
(b) On positionne la tête à l'aide du positionneur de telle sorte que la vis maintenant une plaquette qui présente une arête émoussée soit alignée avec l'axe principal d'une dévisseuse, puis on dévisse la vis à l'aide de la dévisseuse,
(c) On saisit la plaquette à l'aide d'un dispositif de préhension,
(d) On fournit un convoyeur comportant plusieurs réceptacles à plaquettes, et le long duquel sont répartis un premier poste avec le dispositif de préhension, un deuxième poste avec un mécanisme de rotation des plaquettes, un troisième poste avec un mécanisme de déchargement des plaquettes, et un quatrième poste avec un mécanisme d'alimentation en plaquettes,
(e) A l'aide d'un mécanisme de transport on déplace le dispositif de préhension entre le positionneur et le premier poste, puis on dépose à l'aide du dispositif de préhension la plaquette sur le réceptacle qui est en regard du premier poste,
(f) Si la plaquette présente au moins une arête affutée, on effectue les étapes (g), (h), (l), et si la plaquette ne présente aucune arête affutée, on effectue les étapes (i), (j), (k), (l),
(g) on fait se déplacer le convoyeur de façon à amener le réceptacle du premier poste au deuxième poste, puis on fait tourner la plaquette sur elle-même à l'aide du mécanisme de rotation afin de positionner l'arête affutée à la place de l'arête émoussée,
(h) on fait se déplacer le convoyeur de façon à ramener le réceptacle du deuxième poste au premier poste,
(i) on fait se déplacer le convoyeur de façon à amener le réceptacle du premier poste au troisième poste, puis on enlève la plaquette du réceptacle sur laquelle elle se trouve à l'aide d'un mécanisme de déchargement, de telle sorte que le réceptacle est vide,
(j) on fait se déplacer le convoyeur de façon à amener le réceptacle du troisième poste au quatrième poste, puis on dépose une plaquette neuve sur le réceptacle à l'aide d'un mécanisme d'alimentation,
(k) on fait se déplacer le convoyeur de façon à ramener le réceptacle du quatrième poste au premier poste,
(l) On saisit à l'aide du dispositif de préhension la plaquette, puis on transporte le dispositif de préhension depuis le premier poste jusqu'au positionneur à l'aide du mécanisme de transport, puis on dépose la plaquette sur son emplacement sur la tête de telle sorte que le perçage de la plaquette se situe dans le prolongement de la tige de la dévisseuse,
(m) On amène une vis dans le perçage, puis on visse la plaquette sur la tête de l'outil à l'aide de la dévisseuse.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue en perspective du dispositif de remplacement selon l'invention,
- la figure 2 est une vue en perspective du premier poste du dispositif de remplacement selon l'invention,
- la figure 3 est une vue en perspective du dispositif de préhension,
- la figure 4 est une vue en coupe du dispositif de préhension,
- la figure 5 est une vue en perspective du deuxième poste du dispositif de remplacement selon l'invention,
- la figure 6 est une vue en perspective du troisième poste du dispositif de remplacement selon l'invention,
- la figure 7 est une vue en perspective du quatrième poste du dispositif de remplacement selon l'invention.

On considère un outil 800 comprenant un corps 810 et une tête 820, cette tête 820 comportant au moins une plaquette d'usinage 900. Dans la description ci-dessous, on décrit le cas où cette tête 820 porte une pluralité de plaquettes d'usinages 900, chaque plaquette 900 étant munie d'un perçage 930 qui la traverse et par laquelle passe une vis. Cette vis permet de visser la plaquette 900 sur la tête 820 et ainsi de fixer la plaquette 900 sur la tête 820.

Chaque plaquette 900 présente au moins une arête coupante 940 apte à usiner une pièce.

Chaque plaquette 900 représentée sur les figures présente une face inférieure 910, une face supérieure 920, et une face latérale 950 constituée de quatre parties planes de telle sorte que chaque plaquette 900 est une pyramide tronquée dont la base est la face supérieure 920 et le sommet est la face inférieure 910, la plaquette 900 s'évasant depuis la face inférieure 910 vers la face supérieure 920. Chaque plaquette 900 présente donc quatre arêtes coupantes 940, chaque arête 940 étant à la jonction entre la face supérieure 920 et une des parties planes de la face latérale 950.

Le dispositif de remplacement 1 selon l'invention est destiné notamment à remplacer une ou plusieurs de ces plaquettes d'usinage 900 lorsque une ou plusieurs des arêtes 940 de ces plaquettes 900 sont émoussées et ne sont donc plus suffisamment coupantes pour usiner une pièce.

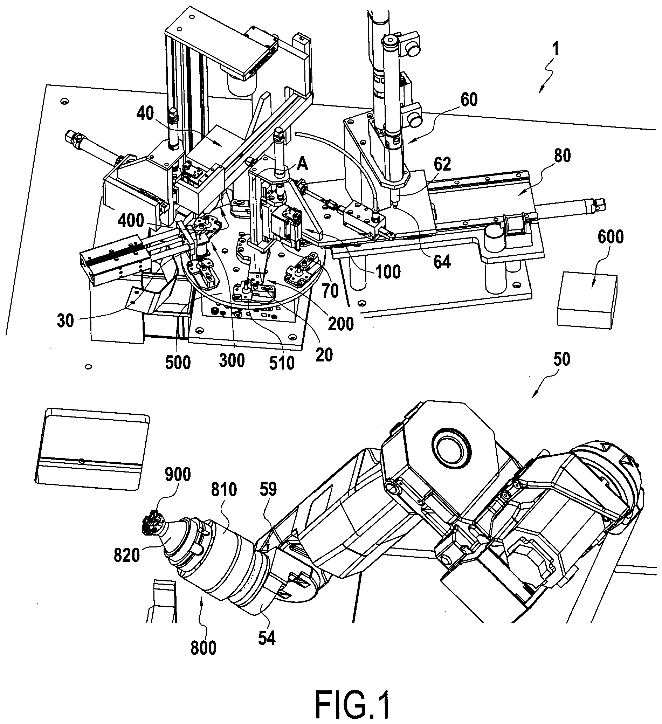

Le dispositif de remplacement 1 comprend plusieurs éléments qui sont disposés sur un support, comme représenté sur les figures 1 à 7 :
- Un positionneur 50 comportant un élément de maintien 59 apte à maintenir le corps 810 de l'outil 800. Par exemple, ce positionneur 50 est un bras articulé dont l'extrémité 54 présente l'élément de maintien 59.
- Un poste de vissage avec une visseuse 60 apte à visser et dévisser des vis,
- Un dispositif de préhension 70 apte à saisir et déposer une plaquette 900,
- Un convoyeur 500 comportant plusieurs réceptacles à plaquettes 900, et le long duquel sont répartis un premier poste 100 avec le dispositif de préhension 70, un deuxième poste 200 avec un mécanisme de rotation 20 sur elles-mêmes des plaquettes 900, un troisième poste 300 avec un mécanisme de déchargement 30 des plaquettes 900, et un quatrième poste 400 avec un mécanisme d'alimentation 40 en plaquettes 900,
- Un mécanisme de transport 80 apte à déplacer le dispositif de préhension 70 entre le positionneur 50 et le premier poste 100 du convoyeur 500,
- Un centre de commande 600 apte à piloter de façon automatisée le positionneur 50, la dévisseuse 60, le dispositif de préhension 70, le mécanisme de transport 80, et le convoyeur 500.

Le convoyeur 500 peut prendre diverses formes, par exemple un carrousel ou un tapis en boucle le long duquel sont répartis les différents postes (100, 200, 300, 400). Dans le cas d'un tapis avançant en boucle dans un même plan horizontal, les postes peuvent être situés à l'intérieur de cette boucle, ou à l'extérieur. Le convoyeur peut également être un plateau tournant autour d'un axe de rotation A.

Cette dernière variante est décrite ci-dessous, en référence aux figures 1 à 7.

Ainsi, le convoyeur est un plateau tournant 500 autour d'un axe de rotation A et portant plusieurs réceptacles à plaquettes 900, et autour duquel sont répartis un premier poste 100 avec le dispositif de préhension 70, un deuxième poste 200 avec un mécanisme de rotation 20 des plaquettes 900, un troisième poste 300 avec un mécanisme de déchargement 30 des plaquettes 900, et un quatrième poste 400 avec un mécanisme d'alimentation 40 en plaquettes 900.

On décrit ci-dessous l'opération du dispositif 1 de remplacement de plaquettes 900 selon l'invention.

Comme représenté sur la figure 1, un opérateur place le corps 810 de l'outil 800 dans l'élément de maintien 59 de telle sorte que l'outil 800 est maintenu fermement et solidaire de l'extrémité 54 du positionneur 50.

En variante, l'extrémité 54 comporte une pince entre les mâchoires de laquelle le corps 810 est placé. La pince constitue alors l'élément de maintien 59.

Le positionneur 50 se déplace ensuite dans l'espace de façon à amener la tête 820 de l'outil 800 au niveau du poste de vissage.

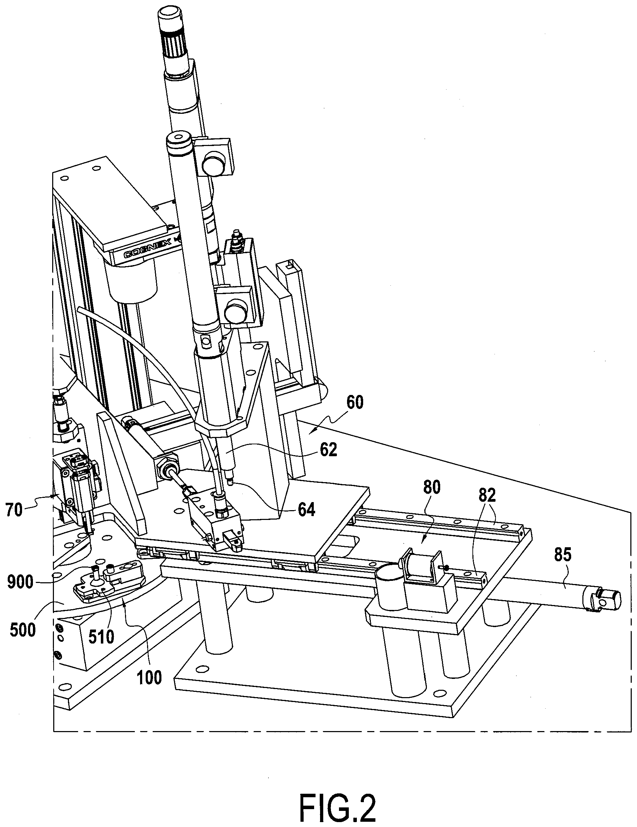

Ce poste est illustré sur la figure 2.

D'une manière générale, le positionneur 50 est apte à se rapprocher ou à s'éloigner de ce poste de vissage.

Le positionneur 50 positionne la tête 820 exactement en dessous de la dévisseuse 60 de telle sorte que la vis qui passe par le perçage 930 de la plaquette 900 est alignée avec l'axe principal de la dévisseuse 60.

Avantageusement, une fois la tête 820 positionnée en dessous de la dévisseuse 60, le positionneur 50 reste fixe. Ceci limite les risques que la plaquette tombe de la tête 820 une fois dévissée.

La dévisseuse 60 présente un moteur, une tige 62 entraînée par ce moteur et qui s'étend selon un axe principal, avec à une extrémité un embout 64 qui est apte à s'enclencher avec la tête d'une vis tenant la plaquette 900 afin de l'entrainer en rotation et ainsi de la visser ou de la dévisser. La tige 62 de la dévisseuse 60 s'approche de la vis jusqu'à ce que son embout 64 s'enclenche avec la tête de la vis, puis la dévisseuse 60 dévisse la vis jusqu'à libérer la plaquette 900. Ainsi la plaquette 900 est désormais simplement posée sur la tête 820.

Ensuite le dispositif de préhension 70 est positionné au-dessus de la tête de l'outil 800 afin de saisir la plaquette 900 après que la plaquette 900 est dévissée par la dévisseuse 60, et soulève la plaquette 900 de façon à l'écarter de la tête 820.

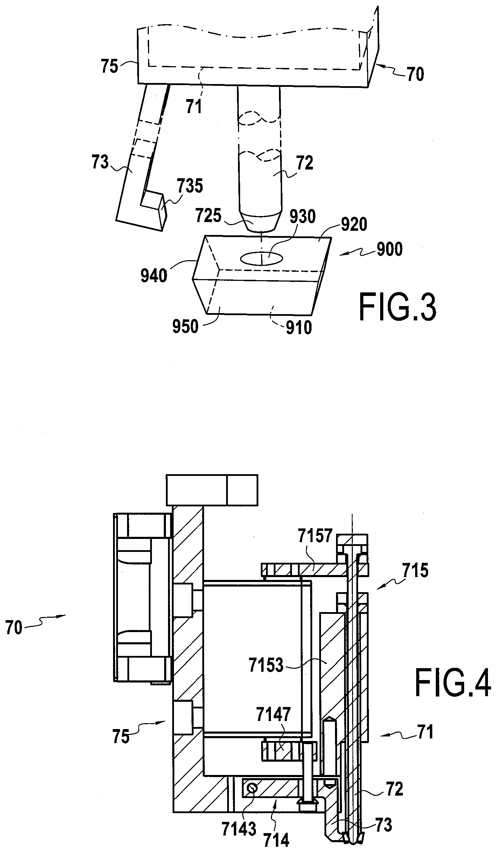

Ce dispositif de préhension 70 est décrit ci-après, en référence aux figures 3 et 4 :
Le dispositif de préhension 70 comporte des moyens de commande 71, une tige circulaire 72, un bras 73. Les moyens de commande 71 comprennent un mécanisme d'articulation 714 et un mécanisme de translation 715. La tige 72 et le bras 73 s'étendent chacun depuis les moyens de commande 71 vers l'extérieur.

La partie distale de la tige 72, qui est la plus éloignée de la partie centrale 75, présente une extrémité 725.

L'extrémité distale du bras 73, qui est la plus éloignée de la partie centrale 75, présente une face d'extrémité 735.

On désigne par partie centrale 75 la région du dispositif de préhension 70 qui comprend les parties proximales de la tige 72 et du bras 73.

Les moyens de commande 71 sont aptes à déplacer la tige 72 et le bras 73 entre une position ouverte et une position de préhension, comme décrit ci-dessous.

Le mécanisme d'articulation 714 comporte une liaison pivot 7143 avec le bras 73 qui permet un mouvement de rotation du bras 73 autour de cette liaison pivot 7143, et un élément d'entrainement 7147 du bras 30 qui fait pivoter en rotation le bras 73 entre une position ouverte où l'extrémité distale du bras 73 est éloignée de la tige 72, et une position de préhension où l'extrémité distale du bras 73 est rapprochée de la tige 72. Le mécanisme de translation 715 de la tige 72 comprend un guide 7153 dans lequel la tige 72 peut coulisser en translation, et un élément d'entrainement 7157 de la tige 72 qui translate la tige 72 entre une position ouverte (position haute sur la figure 3) et une position de préhension (position basse sur la figure 4). L'élément d'entrainement 7147 du bras 73 et l'élément d'entrainement 7157 de la tige 72 sont entraînés par un mécanisme d'entrainement (par exemple à l'aide d'engrenages et d'un moteur).

En position de préhension, l'extrémité distale 725 de la tige 72 est enfoncée dans le perçage 930 de la plaquette 900, et la face d'extrémité 735 du bras 73 est en appui contre une des parties planes de la face latérale 950 de la plaquette 900. Le diamètre de la tige 72 diminue à son extrémité distale 725 de façon à pénétrer plus aisément dans le perçage 930. La face d'extrémité 735 est plane et épouse ainsi la partie plane de la face latérale contre laquelle elle est en appui. Cette situation est illustrée en figure 4.

En position de préhension, la plaquette 900 est ainsi saisie et maintenue entre la tige 72 et le bras 73 et est solidaire du dispositif de préhension 70. Par « solidaire », on entend que la plaquette 900 ne peut être pas séparée du dispositif de préhension 70.

Le dispositif de préhension 70 est monté sur deux rails 82 qui s'étendent entre le positionneur 50 et le premier poste 100.

Ces deux rails 82 et un dispositif de translation 85 le long de ces deux rails font partie du mécanisme de transport 80 mentionné ci-dessus.

Ainsi, le dispositif de préhension 70, une fois la plaquette 900 saisie, est déplacé le long des rails 82 par le dispositif de translation 85 depuis le positionneur 50 jusqu'au premier poste 100 du plateau tournant 500.

La dévisseuse 60 est montée également sur ces deux rails 82.

Ensuite, si nécessaire, le dispositif de préhension 70 pivote sur un axe de rotation vertical afin de positionner au-dessus du plateau tournant 500 la plaquette 900 qu'il a préalablement saisie.

Le dispositif de préhension 70 relâche ensuite la plaquette 900 afin de la poser sur un des réceptacles 510 du plateau 500, en passant d'une position de préhension à une position ouverte. Cette situation est illustrée sur la figure 2. Le plateau 500 comporte plusieurs réceptacles 510 répartis sur sa circonférence, chaque réceptacle 510 étant conformé pour recevoir de façon stable une plaquette 900. Par exemple, chaque réceptacle 510 présente un support 512 apte à recevoir de façon stable une plaquette 900. Ce support est par exemple un cylindre vertical sur la face supérieure duquel une plaquette 900 peut être posée.

Le dispositif de préhension 70 fait partie du premier poste 100.

Les quatre postes (100, 200, 300, 400) sont disposés autour du plateau 500 de telle sorte qu'à chaque rotation incrémentale du plateau 500 générée par le centre de commande 600, un des réceptacles 510 est immédiatement en regard (en face) d'un de ces postes (figure 1). Une rotation incrémentale du plateau 500 consiste à faire tourner le plateau d'un certain angle θ₀, mesuré par rapport au centre de rotation du plateau 500.

Avantageusement, le plateau 500 comporte quatre réceptacles 510, de telle sorte que lorsqu'une plaquette 900 est traitée à un des quatre postes (100, 200, 300, 400) répartis autour du plateau 500, trois autres plaquettes 900 sont chacune traitées à un autre des trois autres postes.

Dans cette configuration, les quatre postes sont disposés aux sommets d'un carré dont le centre est situé sur l'axe de rotation A, c'est-à-dire que deux postes adjacents quelconques sont séparés d'un angle de 90°, qui est l'angle de rotation incrémentale θ₀. Les quatre réceptacles 510 sont également disposés au sommet d'un carré de telle sorte que lorsqu'un des réceptacles 510 est en regard d'un quelconque des postes (100, 200, 300, 400), chacun des trois autres réceptacles 510 est en regard d'un autre des postes.

Ainsi, plusieurs plaquettes 900 peuvent être traitées simultanément, et la productivité du dispositif de remplacement selon l'invention est augmentée, de telle sorte que toutes les plaquettes 900 présentent sur un outil 800 peuvent être remplacées plus rapidement.

Alternativement, comme représenté sur la figure 1, le plateau 500 comporte six réceptacles 510.

L'angle de rotation incrémentale θ₀ peut être l'angle séparant deux postes adjacents, ou l'angle séparant deux réceptacles 510 adjacents.

L'angle de rotation incrémentale θ₀ est le même entre deux postes adjacents quelconques, ou entre deux réceptacles 510 adjacents quelconques. Une telle disposition optimise le temps de traitement d'une série de plaquettes 900 en succession.

Alternativement, cet angle de rotation incrémentale peut varier entre deux postes adjacents ou deux réceptacles 510 adjacents.

On décrit ci-dessous le traitement d'une plaquette 900 après sa dépose par le dispositif de préhension 70 au premier poste 100 sur le réceptacle 510 situé en regard de ce premier poste 100.

On décrit tout d'abord la première variante de traitement d'une plaquette 900, où la plaquette 900 présente encore au moins une arête 940 affutée.

Le plateau 500 pivote de l'angle θ₀ de façon à amener la plaquette 900 en regard du deuxième poste 200. Le deuxième poste 200 comprend un mécanisme de rotation 20 des plaquettes 900, qui est apte à faire tourner une plaquette 900 sur elle-même d'un angle de 90°. Ce deuxième poste 200 permet ainsi, dans le cas où la plaquette 900 présente une ou plusieurs arêtes 940 émoussées et au moins une arête 940 affutée, de positionner cette arête 940 affutée de telle sorte qu'après le remontage de la plaquette 900 sur la tête 820 de l'outil 800, c'est cette arête 940 affutée qui est en position pour usiner une pièce. Ainsi, on positionne une arête 940 affutée à la place de l'arête 940 émoussée qui était auparavant utilisée pour usiner.

Pour positionner ainsi cette arête 940 affutée, une, deux, ou trois rotations de 90° par le mécanisme de rotation 20 peuvent être nécessaires.

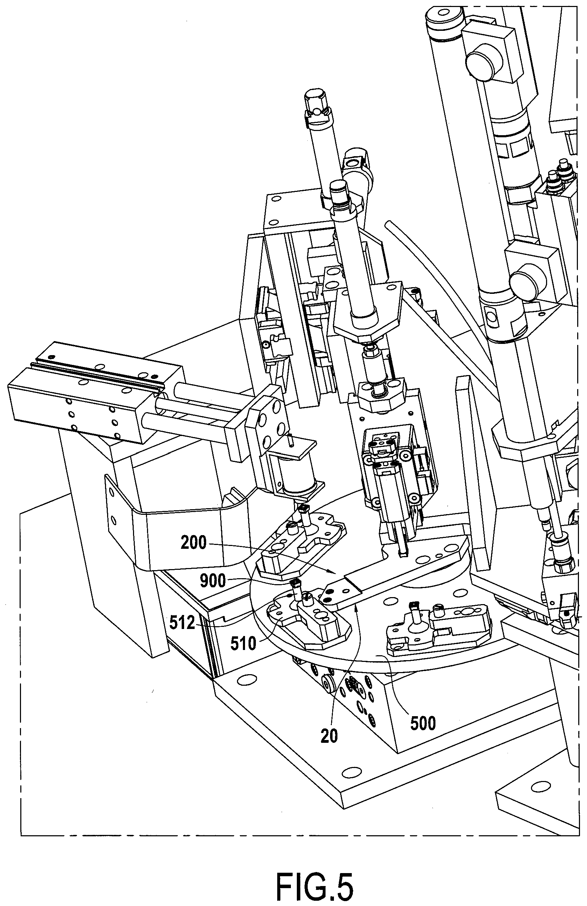

Par exemple, ce mécanisme de rotation 20 est une came mécanique, tel que représenté sur la figure 5. Cette came fait pivoter sur elle-même la plaquette 900 d'un angle de 90°. Si nécessaire, la came est utilisée deux fois afin de faire pivoter la plaquette 900 de 180°, ou trois fois afin de faire pivoter la plaquette 900 de 270°.

Le plateau 500 pivote ensuite trois fois de l'angle θ₀ pour ramener le réceptacle 510 portant la plaquette 900 au niveau du premier poste 100. Le réceptacle 510 ne s'arrête donc pas au niveau du deuxième poste 200 ou du troisième poste 400.

On décrit maintenant la seconde variante de traitement d'une plaquette 900, où la plaquette 900 ne présente plus aucune arête 940 affutée.

Dans ce cas la plaquette 900 doit être remplacée par une plaquette 900 neuve.

Le plateau 500 pivote deux fois de l'angle θ₀ pour amener le réceptacle 510 portant la plaquette 900 directement au niveau du troisième poste 300. Le réceptacle 510 ne s'arrête donc pas au niveau du deuxième poste 200.

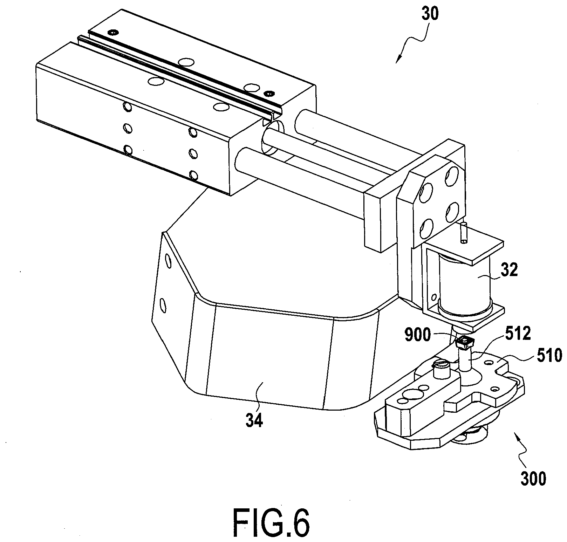

Comme représenté sur la figure 6, le troisième poste 300 comprend un mécanisme de déchargement 30 des plaquettes 900, qui est apte à enlever la plaquette 900 du réceptacle 510 sur laquelle elle se trouve, et à évacuer cette plaquette 900 dans un récipient. Ce mécanisme de déchargement 30 comprend un mécanisme d'enlèvement 32 et un bac de récupération 34. Par exemple, ce mécanisme d'enlèvement 32 est un bras avec un électro-aimant qui attire la plaquette 900 et la retire du réceptacle 510. Le mécanisme d'enlèvement 32 se place ensuite au-dessus du bac de récupération 34 et relâche la plaquette 900 qui tombe dans ce bac 34.

Le plateau 500 pivote ensuite de l'angle θ₀ pour amener le réceptacle 510, désormais sans plaquette, au niveau du quatrième poste 400. Le réceptacle 510 est donc vide.

Le quatrième poste 400 comprend un mécanisme d'alimentation 40 en plaquettes 900 neuves.

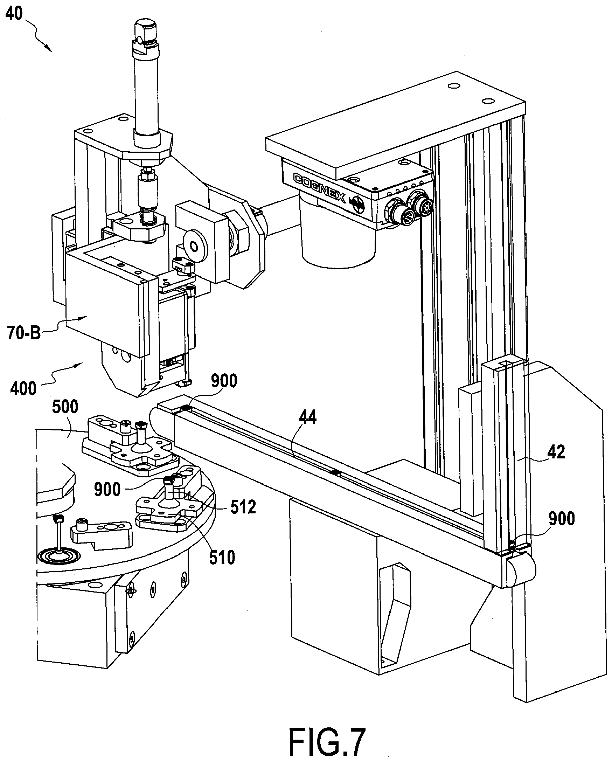

Par exemple, comme représenté sur la figure 7, le mécanisme d'alimentation 40 comporte un magasin 42 qui est un rail vertical dans lequel sont empilées les plaquettes 900 neuves, un convoyeur 44, et un dispositif de préhension 70-B identique au dispositif de préhension 70 décrit ci-dessus.

L'extrémité inférieure du magasin 42 est positionnée au-dessus d'une des extrémités du convoyeur 44, et l'autre extrémité du convoyeur 44 est positionnée à proximité du réceptacle 510 lorsque ce réceptacle 510 est au quatrième poste 400.

Lorsque le réceptacle 510 vide est situé au quatrième poste 400, le magasin 42 relâche (par ouverture d'une trappe à l'extrémité inférieure du magasin 42) une plaquette 900 neuve qui tombe alors sur le convoyeur 44, puis le convoyeur 44 achemine cette plaquette 900 neuve jusque sous le dispositif de préhension 70-B. Le dispositif de préhension 70-B saisit cette plaquette 900 neuve et la dépose sur le réceptacle 510.

Le magasin 42 est par exemple rempli manuellement de plaquettes 900 neuves par un opérateur qui introduit les plaquettes 900 à l'extrémité supérieure du magasin 42.

Le plateau 500 pivote ensuite de l'angle θ₀ pour ramener le réceptacle 510 portant désormais la plaquette 900 neuve au niveau du premier poste 100.

Dans la première variante comme dans la seconde variante décrites ci-dessus, une plaquette 900 (déjà utilisée et ayant été pivotée sur elle-même dans le cas de la première variante, ou neuve dans le cas de la seconde variante) se situe alors sur le réceptacle 510 en regard du premier poste 100.

Cette plaquette 900 est alors saisie par le dispositif de préhension 70 comme décrit ci-dessus. Le mécanisme de transport 80 transporte ensuite le dispositif de préhension 70 depuis le premier poste 100 jusqu'au positionneur 50.

Le dispositif de préhension 70 dépose ensuite la plaquette 900 sur son emplacement sur la tête 820.

Puis on achemine une nouvelle vis jusque dans le perçage 930 de la plaquette 900, de façon connue.

L'acheminement d'une nouvelle vis est effectué par exemple au moyen d'un tuyau creux dont une extrémité est reliée à un réservoir de vis : une vis chemine au travers de ce tuyau et arrive au-dessus du perçage 930.

La plaquette 900, une fois positionnée par le dispositif de préhension 70 et le mécanisme de transport 80 sur la tête 820, se situe en regard de l'embout 64 (le perçage 930 de la plaquette 900 et la vis dans ce perçage 930 se situent dans le prolongement de la tige 62 de la dévisseuse 60) étant donné que la tête 820 est restée immobile. La dévisseuse 60 visse alors la vis de façon à fixer cette plaquette 900 sur la tête 820 de l'outil 800.

Alternativement, une vis est acheminée de façon à pouvoir être saisie par l'embout 64, puis la dévisseuse 60 enfile cette vis dans le perçage 930 puis visse la plaquette 900 sur la tête 820 de l'outil 800.

Le couple de serrage de la vis est choisi de telle sorte que la plaquette 900 est maintenue fermement sur la tête 820.

Par exemple, le couple de serrage est environ égal à 1,2 N·m.

Dans la description ci-dessus, tous les mouvements du positionneur 50, du plateau tournant 500 et des autres mécanismes du dispositif de remplacement 1 sont automatisés, et pilotés par le centre de commande 600.

D'une manière générale, le centre de commande 600 peut piloter un seul ou plusieurs de ces mécanismes et dispositifs, et/ou le plateau tournant 500.

La détection du caractère émoussé ou coupant (aiguisé) d'une arête 940 d'une plaquette 900 peut être effectué visuellement par un opérateur, pour chaque plaquette 900.

Avantageusement, l'outil 800 comporte une puce (par exemple une puce de type « Balluff ») qui enregistre et suit l'historique de chaque plaquette 900 de la tête 820. Cette puce contient donc les informations sur le nombre d'utilisation de chaque arête 940 de chaque plaquette 900, et par conséquent sur le degré d'usure de chacune de ces arêtes, ou sur le fait qu'une arête n'ait jamais été utilisée. Ces données sont transférées au centre de commande 600, et sont utilisées pour piloter les mouvements du plateau tournant 500 et des différents mécanismes des postes (100, 200, 300, 400) afin d'orienter automatiquement chaque plaquette 900 vers la première variante de traitement ou la seconde variante de traitement telles que décrites ci-dessus.

Le dispositif 1 de remplacement de plaquettes 900 et le procédé de remplacement de plaquettes 900 selon l'invention concernent aussi bien le cas où l'outil 800 porte une plaquette ou plusieurs plaquettes.

Dans le cas où l'outil 800 comporte plusieurs plaquettes 900, le centre de commande 600 peut être programmé de telle sorte que, après le remplacement (ou le pivotement) d'une plaquette 900 quelconque, le centre de commande 600 positionne le positionneur 50 et la tête 820 de l'outil 800 de façon à ce que la plaquette 900 suivante puisse être traitée (remplacée ou pivotée sur elle-même) par le dispositif 1.

Le dispositif selon l'invention a été décrit ci-dessus dans le cas où les plaquettes d'usinage 90 ont une forme de pyramide tronquée. Les plaquettes d'usinage 90 peuvent aussi avoir une forme plus générale, dans la limite des formes qui leur permettent d'être saisies par le dispositif de préhension 70.

## Revendications

1. Dispositif de remplacement (1) de plaquettes (900) d'usinage sur un outil (800) comprenant un corps (810) et une tête (820) portant au moins une plaquette (900) d'usinage, chaque plaquette étant maintenue sur ladite tête (820) par une vis, ce dispositif étant **caractérisé en ce qu'**il comprend :
- Un positionneur (50) comportant un élément de maintien (59) apte à maintenir le corps (810) dudit outil,
- Un poste de vissage avec une visseuse (60) apte à visser et dévisser lesdites vis, ledit positionneur (50) étant apte à déplacer ledit outil par rapport audit poste de vissage,
- Un dispositif de préhension (70) apte à saisir et déposer une plaquette (900),
- Un convoyeur (500) comportant plusieurs réceptacles (510) à plaquette, et le long duquel sont répartis un premier poste (100) avec ledit dispositif de préhension (70), un deuxième poste (200) avec un mécanisme de rotation (20) sur elles-mêmes desdites plaquettes, un troisième poste (300) avec un mécanisme de déchargement (30) desdites plaquettes, et un quatrième poste (400) avec un mécanisme d'alimentation (40) en plaquettes,
- Un mécanisme de transport (80) apte à déplacer ledit dispositif de préhension (70) entre ledit positionneur (50) et ledit premier poste (100) du convoyeur (500),
- Un centre de commande (600) apte à piloter de façon automatisée un ou plusieurs des mécanismes et dispositifs et/ou le convoyeur dudit dispositif de remplacement (1).

2. Dispositif de remplacement (1) selon la revendication 1 **caractérisé en ce que** ledit positionneur (50) est un bras articulé dont l'extrémité (54) présente ledit élément de maintien (59).

3. Dispositif de remplacement (1) selon la revendication 1 ou 2 **caractérisé en ce que** ledit convoyeur (500) est un plateau tournant autour d'un axe de rotation A et autour duquel sont répartis lesdits premier poste (100), deuxième poste (200), troisième poste (300), et quatrième poste (400).

4. Dispositif de remplacement (1) selon la revendication 3 **caractérisé en ce que** lesdits quatre postes (100, 200, 300, 400) sont disposés au sommet d'un carré dont le centre est situé sur l'axe de rotation A dudit plateau (500), et **en ce que** ledit plateau (500) comporte quatre réceptacles (510) à plaquette disposés au sommet d'un carré de telle sorte que lorsque qu'un desdits réceptacles (510) est en regard d'un quelconque desdits postes, chacun des trois autres réceptacles (510) est en regard d'un autre desdits postes.

5. Procédé pour le remplacement d'une ou plusieurs plaquettes d'usinage sur un outil (800) comprenant un corps (810) et une tête (820) portant au moins une plaquette d'usinage (900), chaque plaquette (900) présentant au moins une arête (940) et un perçage (930) et étant maintenue sur ladite tête (820) par une vis passant par ledit perçage (930), ce procédé étant **caractérisé en ce qu'**il comporte les étapes suivantes :
(a) On fournit un positionneur (50) comportant un élément de maintien (59) apte à recevoir ledit corps (810) de l'outil (800), et on place le corps (810) dans ledit élément de maintien (59),
(b) On positionne ladite tête (820) à l'aide dudit positionneur (50) de telle sorte que la vis maintenant une plaquette (900) qui présente une arête (940) émoussée soit alignée avec l'axe principal d'une dévisseuse (60), puis on dévisse la vis à l'aide de ladite dévisseuse (60),
(c) On saisit ladite plaquette (900) à l'aide d'un dispositif de préhension (70),
(d) On fournit un convoyeur (500) comportant plusieurs réceptacles (510) à plaquettes (900), et le long duquel sont répartis un premier poste (100) avec le dispositif de préhension (70), un deuxième poste (200) avec un mécanisme de rotation (20) des plaquettes (900), un troisième poste (300) avec un mécanisme de déchargement (30) des plaquettes (900), et un quatrième poste (400) avec un mécanisme d'alimentation (40) en plaquettes (900),
(e) A l'aide d'un mécanisme de transport (80) on déplace ledit dispositif de préhension (70) entre le positionneur (50) et le premier poste (100), puis on dépose à l'aide dudit dispositif de préhension (70) ladite plaquette sur le réceptacle (510) qui est en regard dudit premier poste (100),
(f) Si ladite plaquette (900) présente au moins une arête (940) affutée, on effectue les étapes (g), (h), (I), et si ladite plaquette (900) ne présente aucune arête (940) affutée, on effectue les étapes (i), (j), (k), (I),
(g) on fait se déplacer ledit convoyeur (500) de façon à amener ledit réceptacle (510) du premier poste (100) audit deuxième poste (200), puis on fait tourner ladite plaquette sur elle-même à l'aide du mécanisme de rotation (20) afin de positionner ladite arête (940) affutée à la place de ladite arête (940) émoussée,
(h) on fait se déplacer ledit convoyeur (500) de façon à ramener ledit réceptacle (510) dudit deuxième poste (200) audit premier poste (100),
(i) on fait se déplacer ledit convoyeur (500) de façon à amener ledit réceptacle (510) du premier poste (100) audit troisième poste (300), puis on enlève la plaquette (900) du réceptacle (510) sur laquelle elle se trouve à l'aide d'un mécanisme de déchargement (30), de telle sorte que le réceptacle (510) est vide,
(j) on fait se déplacer ledit convoyeur (500) de façon à amener ledit réceptacle (510) du troisième poste (300) audit quatrième poste (400), puis on dépose une plaquette (900) neuve sur ledit réceptacle (510) à l'aide d'un mécanisme d'alimentation (40),
(k) on fait se déplacer ledit convoyeur (500) de façon à ramener ledit réceptacle (510) dudit quatrième poste (400) audit premier poste (100),
(l) On saisit à l'aide du dispositif de préhension (70) ladite plaquette (900), puis on transporte le dispositif de préhension (70) depuis le premier poste (100) jusqu'au positionneur (50) à l'aide dudit mécanisme de transport (80), puis on dépose la plaquette (900) sur son emplacement sur la tête (820) de telle sorte que le perçage (930) de la plaquette (900) se situe dans le prolongement de la tige (62) de la dévisseuse (60),
(m) On amène une vis dans ledit perçage (930), puis on visse la plaquette (900) sur la tête (820) de l'outil (800) à l'aide de la dévisseuse (60).

6. Procédé selon la revendication 5, **caractérisé en ce que** ledit convoyeur (500) est un plateau tournant autour d'un axe de rotation A et autour duquel sont répartis lesdits premier poste (100), deuxième poste (200), troisième poste (300), et quatrième poste (400).

## Patentansprüche

1. Vorrichtung zum Ersetzen (1) von Bearbeitungseinsätzen (900) an einem Werkzeug (800), umfassend einen Körper (810) und einen Kopf (820), der mindestens einen Bearbeitungseinsatz (900) trägt, wobei jeder Einsatz auf dem Kopf (820) durch eine Schraube gehalten wird, wobei die Vorrichtung **dadurch gekennzeichnet ist, dass** sie umfasst:
- einen Positionierer (50) mit einem Halteelement (59), das geeignet ist, den Körper (810) des Werkzeugs zu halten,
- eine Verschraubungsstation mit einem Schrauber (60), der zum Ein- und Ausdrehen der Schrauben geeignet ist, wobei der Positionierer (50) dazu ausgelegt ist, das Werkzeug relativ zur Verschraubungsstation zu bewegen,
- eine Greifvorrichtung (70) zum Greifen und Ablegen eines Einsatzes (900),
- einen Förderer (500) mit einer Vielzahl von Einsatzaufnahmen (510), wobei an diesem entlang eine erste Station (100) mit der Greifvorrichtung (70), eine zweite Station (200) mit einem Mechanismus (20) zum Drehen der Einsätze um sich selbst, eine dritte Station (300) mit einem Entlademechanismus (30) der Einsätze und eine vierte Station (400) mit einem Zuführmechanismus (40) der Einsätze verteilt sind,
- einen Transportmechanismus (80), der geeignet ist, die Greifvorrichtung (70) zwischen dem Positionierer (50) und der ersten Station (100) des Förderers (500) zu bewegen
- eine Steuerzentrale (600), die geeignet, eine(n) oder mehrere Mechanismen und Vorrichtungen und/oder den Förderer der Vorrichtung zum Ersetzen (1) automatisch zu steuern.

2. Vorrichtung zum Ersetzen (1) nach Anspruch 1, **dadurch gekennzeichnet, dass** der Positionierer (50) ein Gelenkarm ist, dessen Ende (54) das Halteelement (59) aufweist.

3. Vorrichtung zum Ersetzen (1) nach Anspruch 1 oder 2, **dadurch gekennzeichnet, dass** der Förderer (500) ein Drehtisch um eine Drehachse A ist, um die herum die erste Station (100), die zweite Station (200), die dritte Station (300) und die vierte Station (400) verteilt sind.

4. Vorrichtung zum Ersetzen (1) nach Anspruch 3, **dadurch gekennzeichnet, dass** die vier Stationen (100, 200, 300, 400) an der Spitze eines Quadrats angeordnet sind, dessen Mittelpunkt sich auf der Drehachse A des Tischs (500) befindet, und dass der Tisch (500) vier Einsatzaufnahmen (510) aufweist, die an der Spitze eines Quadrats so angeordnet sind, so dass, wenn eine der Aufnahmen (510) einer der Stationen zugewandt ist, jede der drei anderen Aufnahmen (510) einer anderen dieser Stationen zugewandt ist.

5. Verfahren zum Ersetzen eines oder mehrerer Bearbeitungseinsätze an einem Werkzeug (800), umfassend einen Körper (810) und einen Kopf (820), der mindestens einen Bearbeitungseinsatz (900) trägt, wobei jeder Einsatz mindestens eine Kante (940) und eine Bohrung (930) aufweist und auf dem Kopf (820) durch eine Schraube gehalten wird, die durch die Bohrung (930) hindurchgeht, wobei das Verfahren **dadurch gekennzeichnet ist, dass** es die folgenden Schritte umfasst:
(a) Bereitstellen eines Positionierer (50) mit einem Halteelement (59), das geeignet ist, den Körper (810) des Werkzeugs (800) zu halten, und Anordnen des Körpers (810) in dem Halteelement (59),
(b) Positionieren des Kopfes (820) unter Verwendung des Positionierers (50), so dass die Schraube, die einen Einsatz (900) mit einer stumpfen Kante (940) hält, an der Hauptachse eines Schraubers (60) ausgerichtet ist, und anschließendes Lösen der Schraube mit dem Schrauber (60),
(c) Greifen des Einsatzes (900) mit der Greifvorrichtung (70),
(d) Bereitstellen eines Förderers (500) mit einer Vielzahl von Aufnahmen (510) für Einsätze (900), wobei an diesem entlang eine erste Station (100) mit der Greifvorrichtung (70), eine zweite Station (200) mit einem Mechanismus (20) zum Drehen der Einsätze (900), eine dritte Station (300) mit einem Entlademechanismus (30) der Einsätze (900) und eine vierte Station (400) mit einem Zuführmechanismus (40) der Einsätze (900) verteilt sind,
(e) Bewegen der Greifvorrichtung (70) zwischen dem Positionierer (50) und der ersten Station (100) mit Hilfe eines Transportmechanismus (80) und Ablegen des Einsatzes auf der Aufnahme (510) mittels der Greifvorrichtung (70), die sich gegenüber der ersten Position (100) befindet,
(f) Ausführen der Schritte (g), (h), (I), wenn der Einsatz (900) mindestens eine scharfe Kante (940) aufweist, und Ausführen der Schritte (i), (j), (k), (I), wenn der Einsatz (900) keine scharfe Kante (940) aufweist,
(g) Bewegen des Förderers (500), so dass die Aufnahme (510) von der ersten Station (100) zur zweiten Station (200) gebracht wird und Drehen des Einsatzes um sich selbst mittels des Drehmechanismus (20), um die scharfe Kante (940) an der Stelle der stumpfen Kante (940) zu positionieren,
(h) Bewegen des Förderers (500), so dass die Aufnahme (510) von der zweiten Station (200) zu der ersten Station (100) zurückgebracht wird,
(i) Bewegen des Förderers (500), so dass die Aufnahme (510) von der ersten Station (100) zu der dritten Station (300) gebracht wird und Entfernen des Einsatzes (900) aus der Aufnahme (510), auf der er sich befindet, mittels eines Entlademechanismus (30), so dass die Aufnahme (510) leer ist,
(j) Bewegen des Förderers (500), so dass die Aufnahme (510) von der dritten Station (300) zur vierten Station (400) gebracht wird, und Ablegen eines neuen Einsatzes (900) mittels eines Zuführmechanismus (40) auf der Aufnahme (510).
(k) Bewegen des Förderers (500), so dass die Aufnahme (510) von der vierten Station (400) zu der ersten Station (100) zurückgebracht wird,
(l) Greifen des Einsatzes (900) mittels der Greifvorrichtung (70), Transportieren der Greifvorrichtung (70) von der ersten Station (100) zum Positionierer (50) mittels des Transportmechanismus (80) und Ablegen des Einsatzes (900) an seinem Platz auf dem Kopf (820), so dass die Bohrung (930) des Einsatzes (900) in der Verlängerung des Schaftes (62) des Schraubers (60) angeordnet ist,
(m) Einbringen einer Schraube in die Bohrung (930) und Schrauben des Einsatzes (900) auf den Kopf (820) des Werkzeugs (800) mittels des Schraubers (60).

6. Verfahren nach Anspruch 5, **dadurch gekennzeichnet, dass** der Förderer (500) ein Drehtisch um eine Drehachse A ist, um die herum die erste Station (100), die zweite Station (200), die dritte Station (300) und die vierte Station (400) verteilt sind.

## Claims

1. A replacement device (1) for replacing machining inserts (900) on a tool (800) comprising a body (810) and a head (820) carrying at least one machining insert (900), each insert being held on said head (820) by a screw, the device being **characterized in that** it comprises:
• a positioner (50) including a holder element (59) suitable for holding the body (810) of said tool;
• a screwdriver station with a screw gun (60) suitable for tightening and loosening said screws, said positioner (50) being suitable for moving said tool relative to said screwdriver station;
• a grip device (70) suitable for picking up and putting down an insert (900);
• a conveyor (500) having a plurality of receptacles (510) for inserts, and having distributed along it a first station (100) with said grip device (70), a second station (200) with a turning mechanism (20) for turning said inserts on themselves, a third station (300) with an unloading mechanism (30) for unloading said inserts, and a fourth station (400) with an insert feed mechanism (40) ;
• a transport mechanism (80) suitable for moving said grip device (70) between said positioner (50) and said first station (100) of the conveyor (500); and
• a control center (600) suitable for automatically controlling one or more of the mechanisms and devices and/or the conveyor of said replacement device (1).

2. A replacement device (1) according to claim 1, **characterized in that** said positioner (50) is a hinged arm having said holder element (59) at its end (54).

3. A replacement device (1) according to claim 1 or claim 2, **characterized in that** said conveyor (500) is a turntable for turning about an axis of rotation A, with said first station (100), second station (200), third station (300), and fourth station (400) being distributed around the turntable.

4. A replacement device (1) according to claim 3, **characterized in that** said four stations (100, 200, 300, 400) are arranged at the corners of a square centered on the axis of rotation A of said turntable (500), and **in that** said turntable (500) has four insert receptacles (510) arranged at the corners of a square, such that when one of said receptacles (510) is facing any one of said stations, each of the other three receptacles (510) is facing another one of said stations.

5. A method of replacing one or more machining inserts on a tool (800) having a body (810) and a head (820) carrying at least one machining insert (900), each insert (900) presenting at least one edge (940) and a hole (930), and being held on said head (820) by a screw passing through said hole (930), the method being **characterized in that** it comprises the following steps:
a) providing a positioner (50) having a holder element (59) suitable for receiving said body (810) of the tool (800), and placing the body (810) in said holder element (59);
b) using said positioner (50) to position said head (820) so that the screw holding an insert (900) that presents a blunt edge (940) is in alignment with the main axis of a screw gun (60), and then unscrewing the screw with said screw gun (60);
c) using a grip device (70) to pick up said insert (900) ;
d) providing a conveyor (500) having a plurality of receptacles (510) for inserts (900) and having distributed therealong a first station (100) with the grip device (70), a second station (200) with a turning mechanism (20) for turning inserts (900) on themselves, a third station (300) with an unloading mechanism (30) for unloading inserts (900), and a fourth station (400) with a feed mechanism (40) for feeding inserts (900);
e) using a transport mechanism (80) to move said grip device (70) between the positioner (50) and the first station (100), and then using said grip device (70) to put said insert down on the receptacle (510) that is facing said first station (100);
f) if said insert (900) presents at least one sharp edge (940) performing steps g), h), ℓ), and if said insert (900) does not present any sharp edges (940), performing steps i), j), k), ℓ);
g) causing said conveyor (500) to move so as to bring said receptacle (510) from the first station (100) to said second station (200) and then using the turning mechanism (20) to cause said insert to turn on itself so as to position said sharp edge (940) in the position of said blunt edge (940);
h) causing said conveyor (500) to move so as to return said receptacle (510) from said second station (200) to said first station (100);
i) causing said conveyor (500) to move so as to bring said receptacle (510) from the first station (100) to said third station (300), and then using an unloading mechanism (30) to remove the insert (900) from the receptacle (510) on which it is to be found, so that the receptacle (510) is empty;
j) causing said conveyor (500) to move so as to bring said receptacle (510) from the third station (300) to said fourth station (400), and then using a feed mechanism (40) to place a new insert (900) on said receptacle (510);
k) moving said conveyor (500) so as to bring said receptacle (510) from said fourth station (400) to said first station (100);
l) using the grip device (70) to take hold of said insert (900), and then using said transport mechanism (80) to transport the grip device (70) from the first station (100) to the positioner (50), and then placing the insert (900) on its location on the head (820) in such a manner that the hole (930) in the insert (900) is in line with the rod (62) of the screw gun (60); and
m) placing a screw in said hole (930) and then using the screw gun (60) to screw the insert (900) onto the head (820) of the turntable (800).

6. A method according to claim 5, **characterized in that** said conveyor (500) is a turntable for turning about an axis of rotation A and having said first station (100), said second station (200), said third station (300), and said fourth station (400) distributed around the turntable.
